(19) Europäisches Patentamt / European Patent Office / Office européen des brevets

(11) **EP 4 572 507 A1**

(12) **EUROPEAN PATENT APPLICATION**
published in accordance with Art. 153(4) EPC

(43) Date of publication:
**18.06.2025 Bulletin 2025/25**

(21) Application number: 23852803.8

(22) Date of filing: **25.07.2023**

(51) International Patent Classification (IPC):
**H04W 74/08** (2024.01)      **H04W 74/00** (2009.01)
**H04L 1/08** (2006.01)      **H04B 7/06** (2006.01)
**H04W 84/06** (2009.01)

(52) Cooperative Patent Classification (CPC):
**H04B 7/06; H04L 1/08; H04W 74/00; H04W 74/08; H04W 84/06**

(86) International application number:
**PCT/KR2023/010778**

(87) International publication number:
**WO 2024/034922 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.08.2022 KR 20220100876**

(71) Applicant: **LG Electronics Inc.**
**Yeongdeungpo-gu**
**Seoul 07336 (KR)**

(72) Inventors:
- **SHIN, Seokmin**
  **Seoul 06772 (KR)**
- **PARK, Haewook**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR PERFORMING RANDOM ACCESS PROCEDURE IN WIRELESS COMMUNICATION SYSTEM**

(57)      A method and a device for performing a random access procedure in a wireless communication system are disclosed. The method for performing a random access procedure, according to one embodiment of the present disclosure, may comprise the steps of: repeatedly transmitting, to a base station, a random access preamble in a plurality of ROs, the plurality of ROs being related to a plurality of different SS/PBCH block indexes; receiving, from the base station, one or more RARs as a response to the random access preamble; and transmitting, to the base station, a PUSCH on the basis of the one or more RARs.

FIG.11

Receive configuration information related to random access — S1101

Transmit random access preamble — S1102

Receive random access response — S1103

Transmit PUSCH — S1104

**Description**

[Technical Field]

The present disclosure relates to a wireless communication system, and in more detail, relates to a method and an apparatus for performing a random access procedure in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for performing a random access procedure.

In addition, an additional technical object of the present disclosure is to provide a method and an apparatus for repeatedly transmitting a random access preamble.

In addition, an additional technical object of the present disclosure is to provide a method and an apparatus for repeatedly transmitting a random access preamble using different uplink beams.

The technical objects to be achieved by the present disclosure are not limited to the above-described technical objects, and other technical objects which are not described herein will be clearly understood by those skilled in the pertinent art from the following description.

[Technical Solution]

A method performed by a user equipment (UE) in a wireless communication system according to an aspect of the present disclosure may include: repeatedly transmitting a random access preamble to a base station in a plurality of PRACH (physical random access channel) occasions (RO), wherein each of the plurality of ROs is related to a plurality of different SS/PBCH (synchronization signal/physical broadcast channel) block indices; receiving one or more random access responses (RARs) from the base station in response to the random access preamble; and transmitting a PUSCH (physical uplink shared channel) to the base station based on the one or more RARs. The PUSCH may be transmitted using the same spatial filter as a random access preamble transmitted in one RO selected from the plurality of ROs.

A method performed by a base station in a wireless communication system according to an additional aspect of the present disclosure may include: repeatedly receiving a random access preamble from a user equipment (UE) in a plurality of PRACH (physical random access channel) occasions (RO), wherein each of the plurality of ROs is related to a plurality of different SS/PBCH (synchronization signal/physical broadcast channel) block indices; transmitting one or more random access responses (RARs) to the UE in response to the random access preamble; and receiving a PUSCH (physical uplink shared channel) from the UE based on the one or more RARs. The PUSCH may be transmitted using the same spatial filter as a random access preamble transmitted in one RO selected from the plurality of ROs.

[Technical Effects]

According to an embodiment of the present disclosure, repeated transmission of a random access preamble can be supported even at higher subcarrier spacing.

In addition, according to an embodiment of the present disclosure, since a random access preamble is transmitted using different uplink beams, an optimized uplink beam can be applied for subsequent uplink transmission, so that uplink transmission and reception performance can be improved.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a random access process in a wireless communication system to which the present disclosure may be applied.
FIG. 9 illustrates a configuration of a RACH occasion within one RACH slot.
FIG. 10 illustrates a signaling method for a method of performing a random access procedure according to an embodiment of the present disclosure.
FIG. 11 illustrates an operation of a UE in a method of performing a random access procedure according to an embodiment of the present disclosure.
FIG. 12 illustrates an operation of a base station in a method of performing a random access procedure according to an embodiment of the present disclosure.
FIG. 13 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11 (Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300 (NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality

- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

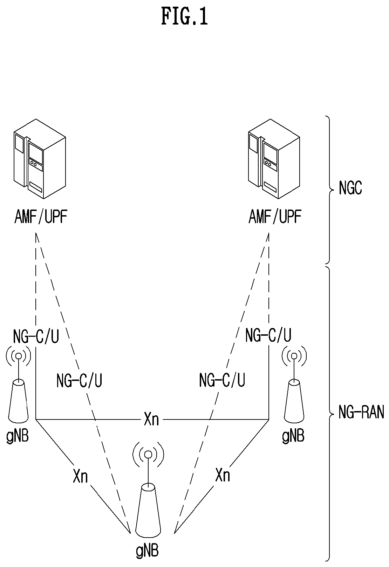

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

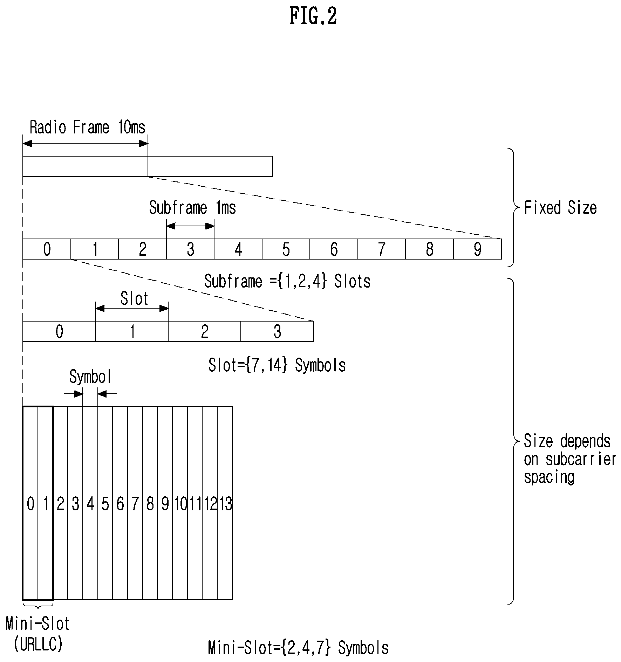

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | Δf=2^μ·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW) .

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$ . Here, $\Delta f_{max}$ is 480·103 Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^u$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table **3**]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

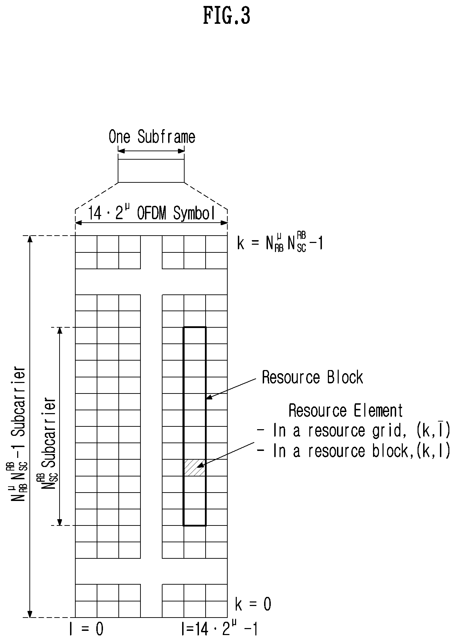

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,..., $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

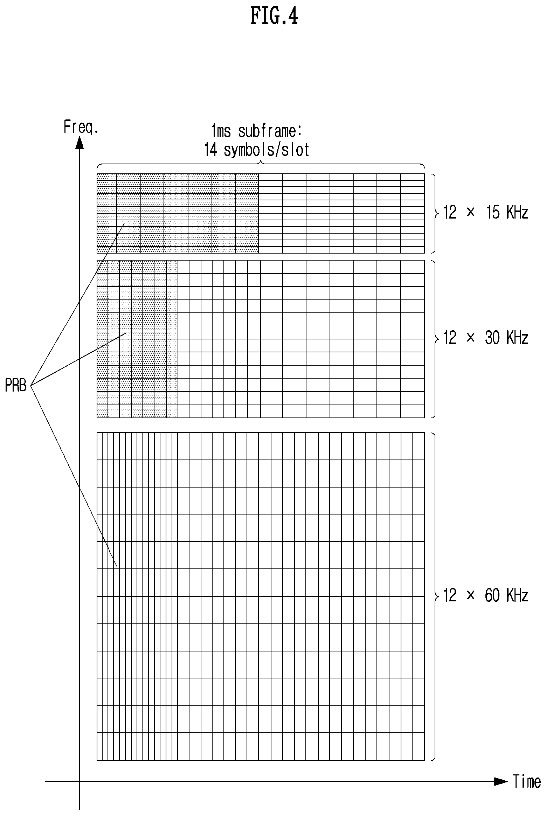

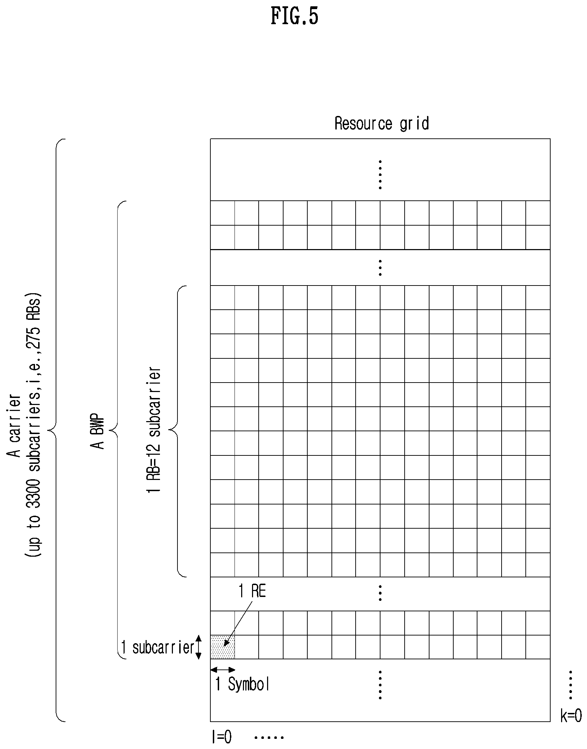

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE (Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

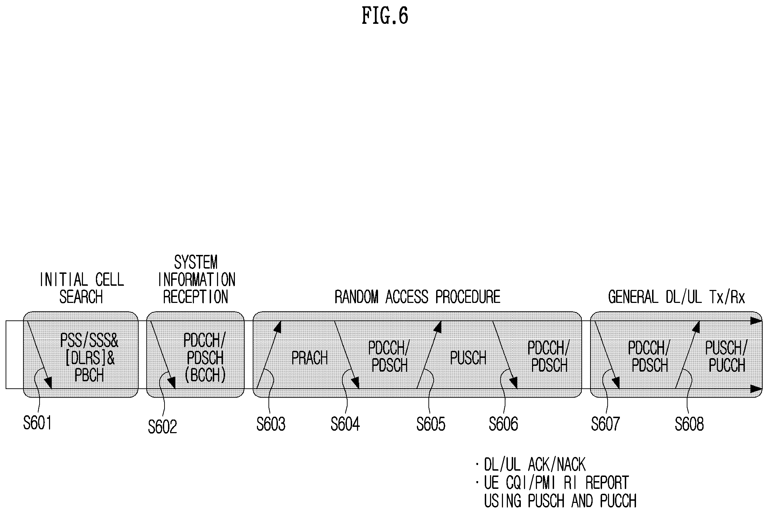

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB (physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL (quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Random access operation and related operation

When there is no PUSCH transmission resource (i.e., uplink grant) allocated by a base station, a UE may perform a random access operation. Random access of the NR system may be initiated 1) when a UE requests or resumes an RRC connection, 2) when a UE performs handover to a neighboring cell or adds a secondary cell group (SCG) (i.e., SCG addition), 3) When a UE perform a scheduling request to a base station, 4) when a base station indicates to a UE random access with a PDCCH order, 5) when a beam failure or RRC connection failure is detected.

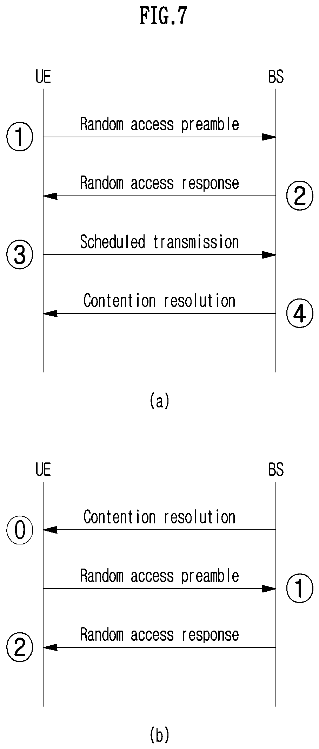

FIG. 7 illustrates a random access process in a wireless communication system to which the present disclosure may be applied. FIG. 7(a) exemplifies a contention-based random access process, and FIG. 7(b) exemplifies a dedicated random access process.

Referring to FIG. 7(a), a contention-based random access process includes the following 4 steps. Hereinafter, messages transmitted in steps 1 to 4 may be referred to as messages (Msg) 1 to 4, respectively.

- Step 1: A UE transmits a random access channel (RACH) preamble through a physical random access channel (PRACH).
- Step 2: A UE receives a random access response (RAR) from a base station through a downlink shared channel (DL-SCH).
- Step 3: A UE transmits a Layer 2/Layer 3 message to a base station through an uplink shared channel (UL-SCH).
- Step 4: A UE receives a contention resolution message from a base station through a DL-SCH.

A UE may receive information on random access from a base station through system information.

If random access is required, a UE transmits an RACH preamble to a base station as in step 1. A base station can distinguish each of random access preambles through a time/frequency resource through which an random access preamble is transmitted (i.e., RACH occasion (RO)) and a random access preamble index (PI).

When a base station receives a random access preamble from a terminal, the base station transmits a random access response (RAR) message to the terminal as in step 2. For reception of a random access response message, in a preconfigured time window (e.g., ra-ResponseWindow), a UE monitors a CRC-masked L1/L2 control channel (PDCCH) with an RA-RNTI (Random Access-RNTI), which includes scheduling information for a random access response message. A PDCCH masked with an RA-RNTI can be transmitted only through a common search space. When receiving a scheduling signal masked with an RA-RNTI, a UE may receive a random access response message from a PDSCH indicated by scheduling information. After that, a terminal checks whether there is random access response information indicated to it in a random access response message. Whether or not random access response information indicated to a UE exists can be confirmed by whether a random access preamble ID (RAPID) for a preamble transmitted by a terminal exists. An index of a preamble transmitted by a UE and a RAPID may be the same. Random access response information includes a corresponding random access preamble index, timing offset information for UL synchronization (e.g., timing advance command (TAC)), UL scheduling information for message 3 transmission (e.g., UL grant), and UE temporary identification information (e.g., TC-RNTI (Temporary-C-RNTI)).

A UE receiving random access response information transmits UL-SCH (Shared Channel) data (message 3) through a PUSCH according to UL scheduling information and a timing offset value, as in step 3. A time and frequency resource in which a PUSCH carrying message 3 is mapped/transmitted is defined as PO (PUSCH Occasion). Message 3 may include a UE's ID (or a UE's global ID). Alternatively, message 3 may include RRC connection request-related information (e.g., an RRCSetupRequest message) for initial access. Message 3 may also include a Buffer Status Report (BSR) on an amount of data available for transmission by a UE.

After receiving UL-SCH data, as in step 4, a base station transmits a contention resolution message (message 4) to a UE. When a UE receives a contention resolution message and contention is successfully resolved, a TC-RNTI is changed to a C-RNTI. Message 4 may include an ID of a UE and/or RRC connection related information (e.g., RRCSetup message). If information transmitted through message 3 and information received through message 4 do not match, or if message 4 is not received for a certain period of time, a UE may determine that contention resolution has failed and retransmit message 3.

Referring to FIG. 7(b), a dedicated random access process includes the following three steps. Hereinafter, messages transmitted in steps 0 to 2 may be referred to as messages (Msg) 0 to 2, respectively. A dedicated random access process may be triggered by using a PDCCH (hereinafter referred to as a PDCCH order) for instructing RACH preamble transmission by a base station.

- Step 0: A base station allocates a RACH preamble to a terminal through dedicated signaling.
- Step 1: A UE transmits a RACH preamble through a PRACH.
- Step 2: A UE receives a random access response (RAR) from a base station through a DL-SCH.

Operations of steps 1 to 2 of a dedicated random access process may be the same as steps 1 to 2 of a contention-based random access process.

In NR, DCI format 1_0 is used to initiate a non-contention based random access procedure with a PDCCH order. DCI format 1_0 is used to schedule a PDSCH in one DL cell. Meanwhile, when a Cyclic Redundancy Check (CRC) of DCI format 1_0 is scrambled with a C-RNTI and all bit values of a "Frequency domain resource assignment" field are 1, DCI format 1_0 is used as a PDCCH order indicating a random access process. In this case, fields of DCI format 1_0 are configured as follows.

- RA preamble index: 6 bits
- UL/SUL (Supplementary UL) indicator: 1 bit. When all bit values of a RA preamble index are not 0 and SUL is configured in a cell for a UE, a PRACH in a cell indicates a transmitted UL carrier. Otherwise, it is unused (reserved).
- SSB (Synchronization Signal/Physical Broadcast Channel) index: 6 bits. When all bit values of a RA preamble index are not 0, it indicates an SSB used to determine a RACH occasion for PRACH transmission. Otherwise, it is unused (reserved).
- PRACH mask index: 4 bits. When all bit values of a RA preamble index are not 0, a RACH occasion associated with an SSB indicated by an SSB index is indicated. Otherwise, it is unused (reserved).
- reserved: 10 bits

When DCI format 1_0 does not correspond to a PDCCH order, DCI format 1_0 is configured with fields used for scheduling a PDSCH (e.g., Time domain resource assignment (TDRA), Modulation and Coding Scheme (MCS), HARQ process number, PDSCH-to-HARQ_feedback timing indicator, etc.).

In NR systems, lower latency than existing systems may be required. In addition, if a random access process occurs in a U-band, a random access process is terminated and contention is resolved only when a UE and a base station sequentially succeed in LBT in all of a 4-step random access process. If LBT fails in any step of a 4-step random access process, resource efficiency is lowered and latency is increased. In particular, if LBT fails in a scheduling/transmission process associated with Message 2 or Message 3, resource efficiency reduction and latency increase may occur significantly. Even in an L-band random access process, a low-latency random access process may be required in various scenarios of the NR system. Therefore, a 2-step random access process can also be performed on an L-band.

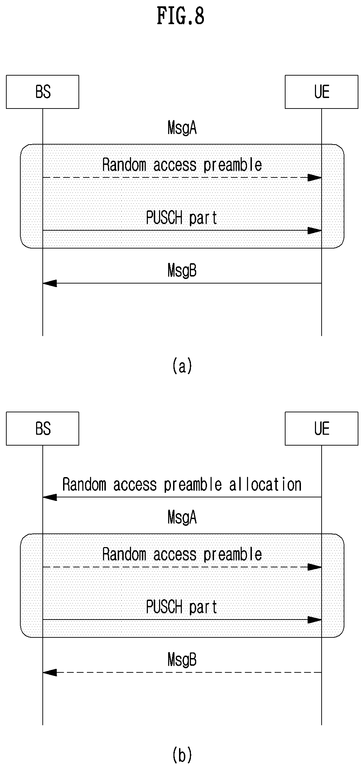

FIG. 8 illustrates a two-step random access process in a wireless communication system to which the present disclosure may be applied.

As shown in FIG. 8(a), a 2-step random access process may include two steps of transmitting an uplink signal (referred to as message A and corresponds to PRACH preamble + Msg3 PUSCH) from a UE to a base station and transmitting a downlink signal (referred to as message B and corresponding to RAR + Msg4 PDSCH) from a base station to a UE.

Also, in a non-contention random access process, as shown in FIG. 8(b), a random access preamble and a PUSCH part may be transmitted together.

Although not shown in FIG. 8, a PDCCH for scheduling message B may be transmitted from a base station to a UE, which may be referred to as Msg. B PDCCH.

Meanwhile, a PRACH format for transmitting a PRACH preamble in the NR system includes a format composed of a length 839 sequence (referred to as a long RACH format for convenience) and a format composed of a length 139 sequence (referred to as a short RACH format for convenience). For example, in FR1, SCS of the corresponding short RACH format is defined as 15 or 30 kHz.

The base station can indicate which PRACH format can be transmitted at a specific timing and for a specific duration through higher layer signaling (e.g., RRC signaling or MAC CE or DCI) (e.g., prach-ConfigurationIndex or msgA-PRACH-ConfigurationIndex) and how many ROs (RACH occasion or PRACH occasion) are present in the corresponding slot. Tables for random access configurations are defined in TS 38.211, and PRACH transmission time domain resources can be determined according to the PRACH configuration index indicated by the higher layer signaling.

Table 8 illustrates part of the table for random access configurations.

[Table 8]

| PRACH configuration index | Preamble format | $N_f \bmod x = y$ | | Slot number | Start symbol | Number r of PRACH slots in a 60 kHz slot | $N_t^{RA,slot}$, Number of time-domain PRACH occasions (RO) within a PRACH slot | $N_{dur}^{RA}$, PRACH duration |
|---|---|---|---|---|---|---|---|---|
| | | x | y | | | | | |
| 81 | A1 | 1 | 0 | 4, 9 | 0 | 1 | 6 | 2 |
| 82 | A1 | 1 | 0 | 7, 9 | 7 | 1 | 3 | 2 |
| 100 | A2 | 1 | 0 | 9 | 9 | 1 | 1 | 4 |
| 101 | A2 | 1 | 0 | 9 | 0 | 1 | 3 | 4 |
| 127 | A3 | 1 | 0 | 4, 9 | 0 | 1 | 2 | 6 |
| 128 | A3 | 1 | 0 | 7, 9 | 7 | 1 | 1 | 6 |
| 142 | B1 | 1 | 0 | 4, 9 | 2 | 1 | 6 | 2 |
| 143 | B1 | 1 | 0 | 7, 9 | 8 | 1 | 3 | 2 |
| 221 | A1/B1 | 1 | 0 | 4, 9 | 2 | 1 | 6 | 2 |
| 222 | A1/B1 | 1 | 0 | 7, 9 | 8 | 1 | 3 | 2 |
| 235 | A2/B2 | 1 | 0 | 4, 9 | 0 | 1 | 3 | 4 |
| 236 | A2/B2 | 1 | 0 | 7, 9 | 6 | 1 | 2 | 4 |
| 251 | A3/B3 | 1 | 0 | 4, 9 | 0 | 1 | 2 | 6 |
| 252 | A3/B3 | 1 | 0 | 7, 9 | 2 | 1 | 2 | 6 |

Referring to Table 8, it can be known how many ROs are defined in each RACH slot for each preamble format ($N_t^{RA,slot}$: the number of time domain PRACH occasions in a PRACH slot) and how many OFDM symbols the PRACH preamble of each preamble format occupies ($N_{dur}^{RA}$: PRACH duration). In addition, since a starting symbol of the first RO can be indicated for each preamble format, it can also inform a UE of a time point from which an RO starts in a corresponding RACH slot.

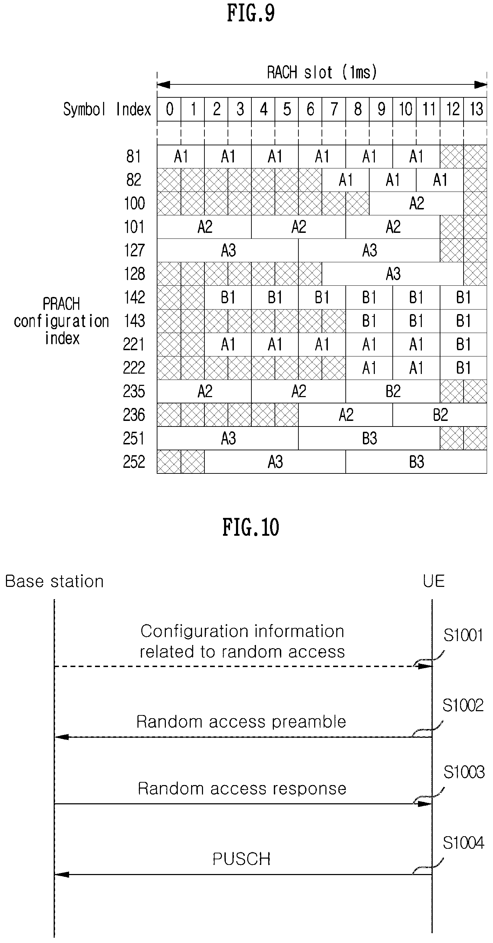

The form in which ROs are configured within a RACH slot according to the PRACH configuration index value exemplified in Table 8 is expressed in a drawing as in FIG. 9.

FIG. 9 illustrates a configuration of a RACH occasion within one RACH slot.

Method for performing random access procedure

The contents described above (NR frame structure, RACH, etc.) can be applied in combination with the methods proposed in the present disclosure to be described later, or can be supplemented to clarify the technical features of the methods proposed in the present disclosure.

In addition, the methods related to configuring a PRACH transmission occasion to be described later are related to uplink transmission, and can be equally applied to the uplink signal transmission method in the NR system (licensed band) or U-Band system (unlicensed band) described above, and the terms, expressions, structures, etc. defined in each system can be appropriately modified or replaced so that the technical feature proposed in the present disclosure can be implemented in the corresponding system.

For example, uplink transmission through methods related to PRACH transmission occasion configuration described later can be performed in an L-cell (licensed cell) and/or U-cell (unlicensed cell) defined in an NR system or a U-Band system.

NR supports multiple numerologies (or subcarrier spacing (SCS)) to support various 5G services. For example, when the SCS is 15 kHz, it supports a wide area in conventional cellular bands. When the SCS is 30 kHz/60 kHz, it supports dense-urban, lower latency, and wider carrier bandwidth. When the SCS is 60 kHz or higher, it supports a bandwidth greater than 24.25 GHz to overcome phase noise.

The NR frequency band is defined by two types of frequency ranges (FR1, FR2). FR1 and FR2 can be configured as shown in Table 7 below. In addition, FR2 can mean millimeter wave (mmW) .

[Table 7]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Meanwhile, in the existing NR system, repetitive transmission techniques have been introduced for UL coverage enhancement, and when these repetitive transmission techniques are applied to an NR non-terrestrial network (NTN), additional UE/base station operations may be required. To this end, the present disclosure proposes various methods that can be considered for PRACH preamble repetitive transmission of an NR terrestrial network (TN) and/or an NR NTN.

Embodiment 1: Preamble repetitive transmission method considering higher SCS

A PRACH transmission method using 480kHz SCS and 960kHz SCS is introduced in FR2-2. However, only a single PRACH transmission is considered in FR2-2, and in order not to change the RA-RNTI formula, only a specific slot among 8 slots (e.g., in the case of 480kHz SCS) or 16 slots (e.g., in the case of 960kHz SCS) corresponding to (included in) 60kHz SCS 1 slot is used as a RACH slot (or PRACH slot).

A starting position of a PRACH preamble is determined as follows.

A start position $t_{start}t^{RA}$ of a PRACH preamble within a subframe (for $\Delta f_{RA} \in \{1.25,5,15,30\}$kHz) or within a 60 kHz slot (for $\Delta f_{RA} \in \{60,120,480,960\}$kHz) is given by Equation 3 below, where $\Delta f_{RA}$ is the SCS of an initial uplink bandwidth part (BWP) during initial access, and otherwise is SCS of an active uplink bandwidth part (BWP).

$$【\text{Equation 3}】$$

$$t^{RA}_{start} = t^{\mu}_{start,l}$$

$$t^{\mu}_{start,l} = \begin{cases} 0 & l = 0 \\ t^{\mu}_{start,l-1} + \left( N^{\mu}_{u} + N^{\mu}_{CP,l-1} \right) \cdot T_{c} & \text{otherwise} \end{cases}$$

Here, a subframe or 60 kHz slot is assumed to start at t=0. The timing advance value $N_{TA}=0$ is assumed. $N_{u}^{\mu}$ and $N_{CP,l-1}^{\mu}$ are given in TS 38.211 section 5.3.1. For $\Delta f_{RA} \in \{1.25,5\}$kHz, $\mu=0$ is assumed, otherwise, the value of $\mu$ corresponds to $\Delta f_{RA} \in \{15,30,60,120,480,960\}$kHz and the symbol position l is given by Equation 4 below.

$$【\text{Equation 4}】$$

$$l = l_{0} + n^{RA}_{t} N^{RA}_{dur} + 14 n^{RA}_{slot}$$

Here, $l_0$ is given as a "start symbol" parameter according to the PRACH configuration index in Tables 6.3.3.2-2 to 6.3.3.2-4 of TS 38.211.

In addition, $n_t^{RA}$ is a PRACH transmission occasion (TO) within a PRACH slot, and PRACH TOs are numbered in ascending order from 0 to $N_t^{RA,slot}-1$ within a RACH slot (i.e., a PRACH slot). Here, $N_t^{RA,slot}-1$ is given in Tables 6.3.3.2-2 to 6.3.3.2-4 of TS 38.211 for $L_{RA} \in \{139,571,1151\}$, and is fixed to 1 for $L_{RA}$=839.

In addition, the PRACH duration $N_{dur}^{RA}$ is given in TS 38.211 Tables 6.3.3.2-2 to 6.3.3.2-4.

In addition, $n_{slot}^{RA}$ is given as follows:

- If $\Delta f_{RA} \in \{1.25,5,15,60\}$kHz, then $n_{slot}^{RA}$=0;
- If $\Delta f_{RA} \in \{30,120\}$kHz and the number of PRACH slots in a subframe in TS 38.211 Tables 6.3.3.2-2 to 6.3.3.2-3 or the number of PRACH slots in a 60kHz slot in TS 38.211 Table 6.3.3.2-4 is equal to 1, then $n_{slot}^{RA}$=1, otherwise $n_{slot}^{RA} \in \{0,1\}$.
- $\Delta f_{RA} \in \{480,960\}$kHz, and

  i) if the number of PRACH slots in a 60kHz slot is 1 in TS 38.211 Table 6.3.3.2-4, then $n_{slot}^{RA}$=7 for $\Delta f_{RA}$=480kHz and $n_{slot}^{RA}$=15 for $\Delta f_{RA}$=960kHz, or
  ii) In TS 38.211 Table 6.3.3.2-4, if the number of PRACH slots in a 60 kHz slot is 2, then $n_{slot}^{RA} \in \{3,7\}$ for $\Delta f_{RA}$=480 kHz, and $n_{slot}^{RA} \in \{7,15\}$ for $\Delta f_{RA}$=960 kHz.

In this way, when the SCS for the uplink BWP is 480 kHz or 960 kHz, only one specific slot among the 8 slots (e.g., in the case of 480 kHz SCS) or 16 slots (e.g., in the case of 960 kHz SCS) corresponding to (including) the 60 kHz slot is used as a RACH slot (or a PRACH slot). For example, when $n_{slot}^{RA} \in \{3,7\}$, the UE can select one value from among 3 or 7, and when $n_{slot}^{RA} \in \{7,15\}$, the UE can select one value from among 7 or 15.

The RA-RNTI value is calculated by the following Equation 5.

【Equation 5】

$$RA\text{-}RNTI = 1 + s\_id + 14 \times t\_id + 14 \times 80 \times f\_id + 14 \times 80 \times 8 \times ul\_carrier\_id$$

Here, s_id is an index of the first OFDM symbol of a PRACH opportunity (RO) ($0 \leq$ s_id $\leq$14). t_id is an index of the first slot of a PRACH occasion within a system frame ($0 \leq$ t_id $\leq$80), where, when p={0,1,2,3}, SCS for determining t_id is based on a value of $\mu$. When p={5,6} (i.e., 480 kHz, 960 kHz), t_id is an index of a 120 kHz slot including a PRACH occasion (i.e., RO) within a system frame ($0 \leq$ t_id $\leq$80). f_id is an index of a PRACH occasion in frequency domain ($0 \leq$ f_id $\leq$8). ul_carrier_id is a UL carrier used for random access preamble transmission (0 for NUL (normal uplink) carrier, 1 for SUL (supplementary uplink) carrier).

As above, when the SCS for a uplink BWP is 480 kHz or 960 kHz, a RA-RNTI is determined based on an index of a 120 kHz slot. That is, even if SCS for a uplink BWP supports PRACH single transmission when it is 480 kHz or 960 kHz, the Equation 5 for calculating a RA-RNTI can be used without change.

PRACH transmission using higher subcarrier spacing may be considered for coverage enhancement. For example, the PRACH repetition transmission method using 480 kHz, 960 kHz SCS introduced in the FR2-2 may be considered for introduction to NR TN and/or NR-NTN.

In this case, the following UE/base station operations may be configured/defined. A base station may provide the following information to a UE in addition to an RACH configuration in which a PRACH SCS value, etc. is configured/indicated through higher layer signaling (e.g., system information block (SIB) etc.). For example, a base station may provide a PRACH repetition number and/or a starting RACH slot index and/or a starting RACH occasion (RO) symbol index, etc. Here, a base station may configure/indicate all information related to PRACH repetition to a UE. Alternatively, a base station may configure/indicate a UE whether to use a preconfigured/defined value or not. For example, if a base station does not provide a parameter related to PRACH repetition, a UE may use a default value, and if a base station provides the parameter, a UE may use the value provided through the parameter.

Meanwhile, a base station may configure/indicate only one or more specific parameter(s) to a UE. In this case, for other parameters that are not configured/indicated, a UE may be configured/defined to follow a predefined value (or a value determined according to a predefined formula/rule). For example, a base station may provide a PRACH repetition number to a UE, and a starting RO symbol index and a starting RACH slot index may be configured to follow a predefined/configured value (or a value determined according to a predefined formula/rule). For example, for a starting RO symbol index, it may be configured/defined that the first RO is always used. Similarly, for a starting RACH slot index, the number of RACH slots corresponding to 1 slot of 60 kHz SCS may be configured to 1 or 2, and for each value, it may be configured/defined that the first slot among the corresponding 480 kHz (or 960 kHz) SCS RACH slots is always used.

Alternatively, assuming that a PRACH repetition number configured/indicated by a base station is M, and the number of TDM (time division multiplexed) ROs that can be used for repeated transmission (with the same beam) per single RACH slot is L, a start RACH slot index to be selected/configured by a UE can be defined as follows.

The method below is a method for terminating PRACH repetition transmission in the last slot among multiple higher SCS slots while the PRACH repetition configured/indicated by a base station does not exceed multiple higher SCS (e.g., 480, 960 kHz) slots corresponding to (included in) a 60 kHz SCS slot.

1. When one RACH slot is present in a 60 kHz SCS slot

- 480 kHz SCS

i) It can be configured to 7-ceil(M/N)+1 (or 8-ceil(M/N)) (ceil(x) is the smallest integer not less than x).
ii) Here, a base station can indicate the above parameters (PRACH repetition number 'M', TDM RO number 'L' that can be used for repeated transmission per single RACH slot) so that the ceil(M/N) value is an integer less than or equal to 8.

- 960 kHz SCS

i) It can be configured to 15-ceil(M/N)+1 (or 16-ceil(M/N)).
ii) Here, a base station can indicate the above parameters (PRACH repetition number 'M', TDM RO number 'L' that can be used for repeated transmission per single RACH slot) so that the ceil (M/N) value is an integer less than or equal to 16.

2. When the number of RACH slots is 2 in a 60 kHz SCS slot

- 480 kHz SCS

i) It can be configured to 3-ceil(M/N)+1 and 7-ceil (M/N) +1 (or 4-ceil(M/N) and 8-ceil(M/N) (ceil (x) is the smallest integer not less than x).
ii) Here, a base station can indicate the above parameters (PRACH repetition number 'M', TDM RO number 'L' that can be used for repeated transmission per single RACH slot) so that the ceil(M/N) value is an integer less than or equal to 4.

- 960 kHz SCS

i) It can be configured to 7-ceil(M/N)+1 and 15-ceil(M/N)+1 (or 8-ceil(M/N) and 16-ceil(M/N)).
ii) Here, a base station can indicate the above parameters (PRACH repetition number 'M', TDM RO number 'L' that can be used for repeated transmission per single RACH slot) so that the ceil(M/N) value is an integer less than or equal to 8.

Through the above proposed methods, when a start RACH slot index and/or a start RO symbol index are determined, a UE can perform PRACH repeated transmission using ROs (located consecutively in a time domain or mapped to the same SSB even if they are discontinuous in a time domain) corresponding to a configured/indicated repetition number from the RO index of the determined RACH slot. Here, a UE can expect that a random access response (RAR) is transmitted after transmitting a preamble in the last RO.

In addition, a RA-RNTI value can be determined by reusing the equation defined in the existing NR (i.e., Equation 5). Here, a UE's operation for determining a symbol index for RA-RNTI calculation needs to be added. For example, in Equation 5, s_id can be determined as the first OFDM symbol index of the first RO among the ROs used for repeated transmission, or can be determined as the first OFDM symbol index of the last RO among the ROs used for repeated transmission. In addition, when the RO for determining the symbol index is determined as described above (i.e., the first RO or the last RO), a UE can obtain a slot index required for RA-RNTI calculation by reusing the UE's operation defined in the existing FR2-2 based on a position of the corresponding RO. That is, a RA-RNTI slot index can be determined depending on which slot the specific RO is located in among two 120 kHz SCS slots corresponding to a 60 kHz SCS single slot.

In addition, the above proposed method can be similarly applied when considering other SCS values as well as the SCS introduced in FR2-2.

Embodiment 2: Preamble repetition transmission method using different beams

First, multi-beam transmission of SSB (synchronization signal block) is described.
An SSB can be transmitted periodically using beam sweeping. In this case, an SSB index is implicitly linked to an SSB beam. An SSB beam can be changed in units of SSB (index) or in units of SSB (index) groups. In the latter case, the SSB beam remains the same within the SSB (index) group. That is, the transmission beam direction of an SSB is repeated in multiple consecutive SSBs. The maximum number of SSB transmissions L within an SSB burst set has a value of 4, 8, or 64 depending on a frequency band to which a carrier belongs. Therefore, the maximum number of SSB beams within an SSB burst set can also be given as follows depending on a frequency band of a carrier.

- For frequency ranges up to 3 GHz, the maximum number of beams = 4
- For frequency ranges from 3 GHz to 6 GHz, the maximum number of beams = 8
- For frequency ranges from 6 GHz to 52.6 GHz, the maximum number of beams = 64

     * If multi-beam transmission is not applied, the number of SSB beams is 1.

When a UE attempts initial access to a base station, the UE may align beams with the base station based on an SSB. For example, a UE performs SSB detection and then identifies the best SSB. Thereafter, a UE may transmit a RACH preamble to a base station using a PRACH resource linked/corresponding to an index (i.e., beam) of the best SSB. An SSB may be used to align beams between a base station and a UE even after the initial access.

Meanwhile, a method of repeatedly transmitting PRACH preambles using beams in different directions may also be considered. In other words, when a UE repeatedly transmits PRACH preambles on multiple ROs, it may perform repeated PRACH preamble transmissions using different beams for each RO.

Hereinafter, in the description of the present disclosure, a beam may be interpreted as a spatial filter, and performing repeated transmission of a PRACH preamble using different beams may be interpreted as performing repeated transmission of a PRACH preamble using different spatial filters.

This has the advantage that a UE can increase beam diversity by repeatedly transmitting a PRACH preamble using multiple different UL beams.

An initial base station can configure/indicate to perform repeated transmission of a PRACH preamble using multiple ROs mapped to multiple different beam directions (i.e., different SSB indices) through higher layer signaling (e.g., SIB, etc.). Here, a base station can provide a UE with at least one of a start RACH slot index, a start RO index, a repetition count, a number of different beams, etc., and the UE can perform repeated transmission of the PRACH preamble according to the configured/indicagted information/parameter values.

Here, for example, a UE may determine/consider that all ROs having different UL beams mapped to all SSBs configured by a base station can be used for repeated PRACH preamble transmission. In this case, a problem may arise that even ROs mapped to a specific SSB may be included in repeated PRACH preamble transmission even if an RSRP value of a specific SSB is very low. Therefore, it may be desirable for a UE to determine that ROs mapped to SSB(s) greater than or equal to a specific (RSRP) threshold (pre-configured/defined or indicated by a base station) can be used for repeated PRACH preamble transmission. For example, SSB index 1 to 5 may be mapped one-to-one to RO 1 to 5, respectively, and if RSRP values for SSB indexes 2 and 5 are lower than a threshold, a UE may perform repeated PRACH preamble transmission only on RO 1, 3, and 5 mapped to SSB index 1, 3, and 5.

Here, an RAR configuration and RA-RNTI configuration method between a UE and a base station must be determined (i.e., not all ROs are used for repeated PRACH preamble transmission), and the following methods are proposed for this purpose.

Method 1: A UE can expect one RAR for entire repeated PRACH preamble transmission, and here, a RA-RNTI value can also be configured to one.

In the first method, a UE can be configured/defined to expect an RAR after a predefined time from a time at which a PRACH preamble is transmitted in the last RO among ROs used for repeated PRACH preamble transmission. Here, a RA-RNTI value to be used for the corresponding RAR can be determined based on a specific RO among ROs used for repeated PRACH preamble transmission (for example, s_id can be determined as an index of the first OFDM symbol of the first RO or an index of the first OFDM symbol of the last RO in Equation 5). In addition, a preamble index transmitted to the specific RO (for example, the first RO or the last RO) can be configured to be used as a random access preamble identifier (RAPID).

Here, since PRACH preambles transmitted from one UE through multiple ROs are transmitted through different UL beams, a base station can inform the UE which PRACH preamble transmitted through which RO is the best from the base station reception perspective,. That is, a base station can provide the best UL beam information to a UE through an RAR or a PDCCH (i.e., DCI) that schedules an RAR. For example, a base station can select one of multiple preambles transmitted by a UE (or one of the multiple UL beam indices (or SSB indices), or one of the multiple RO indices) and inform a UE of it by using a reserved bit field of an RAR. As another example, a base station can inform a UE of one of the multiple preambles (or one of the multiple UL beam indices (or SSB indices), or one of the multiple RO indices) through a value of a newly defined field (or through a value (or a combination of values) of an existing defined field) in DCI for scheduling an RAR (i.e., DCI for scheduling a PDSCH carrying an RAR). Then, a UE can transmit a Msg. 3 PUSCH in a best UL beam direction provided by a base station (i.e., the UL beam direction associated with the indicated preamble (or UL beam index or SSB index or RO index)).

As another example, instead of only informing a UE of the best UL beam, a base station can provide a UE with one or more candidates that can be the best UL beam. For example, using a reserved bit field of an RAR, a base station can select and inform a UE of multiple preamble indices (or multiple UL beam indices, or multiple RO indices) that are greater than or equal to a specific (RSRP) threshold when determining from the base station reception perspective among multiple preambles transmitted by a UE (or multiple UL beam indices, or multiple RO indices). As another example, a base station can inform a UE of the selected multiple preamble indices (or multiple UL beam indices (or SSB indices), or multiple RO indices) through a value of a newly defined field (or through the value (or combination of values) of an existing defined field) in DCI that schedules an RAR (i.e., DCI that schedules a PDSCH carrying the RAR). After that, a UE can select one of the multiple preambles (or multiple UL beam indices (or SSB indices), or multiple RO indices) indicated by a base station through an RAR (or through DCI that schedules an RAR) and transmit a Msg. 3 PUSCH according to the corresponding beam direction. Here, a UE can determine one preamble index (or one UL beam index (or SSB index), one RO index) according to a specific rule. For example, among SSB indices mapped to ROs (or corresponding to multiple UL beam indices (or SSB indices)) that include multiple preamble indices indicated by a base station through an RAR (or through DCI for scheduling the RAR), a UE can select an RO mapped to an SSB index with the best reference value (e.g., RSRP value, etc.) from the perspective of a UE and transmit a Msg. 3 PUSCH in the corresponding beam direction.

Method 2: A UE may expect multiple RARs for entire PRACH preamble repetition transmission, where RA-RNTI values may also be configured to multiple values.

Alternatively, a UE may be configured/defined to expect each RAR after a predefined time from a time of transmitting a PRACH preamble in each RO. In other words, a UE may expect an RAR to be transmitted for each repeated transmission of a PRACH preamble (or for each RO). Here, a RA-RNTI value to be used for each RAR may be configured to be the same as the existing NR.

After that, a UE needs to decide which of the multiple received RARs will be used to transmit a Msg. 3 PUSCH.

For example, a UE may be configured to transmit a Msg. 3 PUSCH to a base station based on an RAR received first among multiple RARs (i.e., based on scheduling information of an RAR received first). That is, since the provision of an RAR from a base station may mean that a UL beam mapped to a corresponding RO is not bad from the base station reception perspective, if configured in this way, a UE does not need to receive RARs for other PRACH preambles and has an advantage in that an RACH procedure can be completed quickly.

As another example, a UE may be configured to select one RAR among the successfully received RARs according to a specific rule after receiving multiple RARs, and transmit a Msg. 3 PUSCH to a base station according to the selected RAR (i.e., based on scheduling information of the selected RAR). Specifically, among the SSB indices mapped to the RO corresponding to the successfully received RAR, a UE may select an RAR corresponding to an RO mapped to an SSB index with the best specific reference value (e.g., RSRP value, etc.), and transmit a Msg. 3 PUSCH to a base station according to the selected RAR (i.e., based on the scheduling information of the selected RAR). This method has the advantage of being able to select the best UL beam by maximizing the utilization of UL beam diversity.

Additionally, if a UE repeatedly transmits a PRACH preamble using multiple UL beams and fails to receive an RAR from a base station, the multiple UL beams may be unfavorable from the base station reception perspective. Therefore, a UE may be configured to reselect a UL beam set before power ramping when retransmitting a PRACH preamble. In this case, similar to the current standard, a power ramping counter may not be increased, but only a preamble transmission counter may be increased. For example, when a preamble transmission counter reaches a predetermined value, a power ramping counter may be increased. In addition, when a preamble transmission counter is increased for a power ramping counter and reaches a predetermined value, the power ramping counter may be increased.

Meanwhile, a UE may configure the PRACH preamble index to be used for different ROs to be the same at a specific transmission time (for example, a time period in which repeated transmission of the PRACH preamble is performed as many times as the number of repetitions of the PRACH preamble), but may also configure the PRACH preamble index to be changed according to a pre-set/defined RAPID hopping pattern to perform repeated transmission. This has the effect of reducing RAPID collisions between UEs. Here, the hopping pattern may be defined using at least one of parameters such as a cell ID, a slot index, and a frequency RO index.

Among the above proposed methods, the RA-RNTI configuration method can be similarly applied to a MSGB-RNTI. In addition, the above proposed method can be configured/applied to other UL signals/channels such as a PUSCH/PUCCH.

In addition, it is obvious that the examples of the proposed method described above can also be included as one of the implementation methods of the present disclosure, and thus can be considered as a kind of proposed methods. In addition, the proposed methods described above can be implemented independently, but can also be implemented in the form of a combination (or merge) of some proposed methods. Information on whether the proposed methods are applied (or information on the rules of the proposed methods) can be notified by a base station to a UE through a predefined signal (e.g., a physical layer signal or a higher layer signal), or a rule can be defined to notify. In addition, the higher layer in the present disclosure can include one or more of the functional layers, such as MAC, RLC (Radio Link Control), PDCP

(Packet Data Convergence Protocol), RRC, and SDAP (Service Data Adaption Protocol).

The methods, embodiments or descriptions for implementing the method proposed in the present disclosure may be applied separately, or one or more methods (or embodiments or descriptions) may be applied in combination.

FIG. 10 illustrates a signaling method for a method of performing a random access procedure according to an embodiment of the present disclosure.

FIG. 10 illustrates signaling between a base station (e.g., TRP 1, TRP 2) and a UE to which the methods proposed in the present invention can be applied. Here, the UE/base station is only an example, and various devices can be applied instead. FIG. 10 is only for convenience of explanation, and does not limit the scope of the present disclosure. In addition, some of the steps illustrated in FIG. 10 may be omitted depending on the situation and/or settings.

Referring to FIG. 10, a UE can receive configuration information related to random access from a base station (S1001).

Here, the configuration information (e.g., RACH-ConfigCommon, RACH-ConfigDedicated, etc.) may include information for supporting repeated transmission of a random access preamble, and such information may include at least one of, for example, a number of repetitions of a random access preamble, a start RACH slot (i.e., a slot in which the random access preamble is transmitted) index, and a start RO (i.e., PRACH/RACH occasion) symbol index. In addition, the configuration information may include information for supporting repeated transmission of a random access preamble using different UL beams (or spatial filters), and an example of such information may include information such as the number of different beams.

The configuration information can be transmitted through higher layer signaling (e.g., SIB, RRC signaling, etc.).

A UE repeatedly transmits a random access preamble to a base station in multiple ROs (S1002).

Here, a random access preamble may be transmitted through a physical random access channel (PRACH) and may be referred to as Msg1 in a type 1 random access procedure (step 4). Additionally, it may be referred to as MsgA together with a PUSCH transmission in a type 2 random access procedure (step 2).

Here, according to the embodiment 1 above, when a random access preamble is transmitted in a higher SCS slot (e.g., a 480 kHz or 960 kHz SCS slot), the repeated transmission of the random access preamble can be terminated within the (corresponding) higher SCS slots included in one 60 kHz SCS slot. That is, the repeated transmission of the random access preamble is not performed to cross the boundary of one 60 kHz SCS slot, and the repeated transmission of the random access preamble can be completed only within one 60 kHz SCS slot.

Additionally, a start slot index and/or a start RO index for repeated transmission of the random access preamble may be determined such that the repeated transmission of the random access preamble is terminated/completed in the last higher SCS slot among the higher SCS slots included (corresponding to) in the one 60 kHz SCS slot.

In addition, according to the Embodiment 2 above, a UE may repeatedly transmit the random access preamble using different UL beams (i.e., spatial filters) in multiple ROs (or multiple RO groups). That is, the UL beam (i.e., spatial filter) used for transmitting the random access preamble may be different for each RO (or each RO group). In this case, the multiple ROs may be associated/mapped to different multiple SS/PBCH block indices, respectively.

In addition, by combining Embodiments 1 and 2 above, when the random access preamble is transmitted in a higher SCS slot (e.g., a 480 kHz or 960 kHz SCS slot), a UE can repeatedly transmit the random access preamble using different UL beams (i.e., spatial filters) in multiple ROs (or multiple RO groups).

A UE receives one or more random access responses (RARs) from a base station in response to the random access preamble (S1003).

Here, a random access response (RAR) (or RAR message) may be transmitted over a PDSCH, and a UE may receive a PDSCH providing/carrying an RAR message based on scheduling information of a PDCCH (i.e., DCI). The RAR message received over this PDCCH/PDSCH may be referred to as Msg2 in a Type 1 random access procedure (step 4) and may be referred to as MsgB in a Type 2 random access procedure (step 2).

Here, according to the Embodiment 2 above, when a random access preamble is repeatedly transmitted in a plurality of ROs, a single RAR may be transmitted after a predetermined time from the transmission of the random access preamble in a specific RO (e.g., the last RO) among the plurality of ROs. That is, the random access preamble is repeatedly transmitted, but the RAR may be transmitted only once.

Here, information about one RO selected from among multiple ROs to which random access preambles are repeatedly transmitted from the base station (or information on the selected UL beam) may be provided through the single RAR or DCI (or PDCCH) scheduling the single RAR.

Alternatively, information on one or more ROs selected from among multiple ROs to which random access preambles are repeatedly transmitted from the base station (or information on one or more selected UL beams) (i.e., information on RO/UL beam candidates) may be provided through the single RAR or DCI (or PDCCH) scheduling the single RAR.

Here, according to the Embodiment 2 above, when the random access preamble is repeatedly transmitted in multiple ROs, multiple RARs can be transmitted as each RAR is transmitted after a predetermined time for each transmission of the random access preamble in each of the multiple ROs. That is, the random access preamble is repeatedly transmitted, and the RAR can also be transmitted multiple times.

A UE transmits a PUSCH to a base station based on one or more RARs (S1004).

Here, a PUSCH can be transmitted based on the scheduled information included in the RAR (i.e., RAR UL grant). In the Type 1 random access procedure (step 4), the PUSCH can be referred to as a Msg3 PUSCH.

Here, according to the Embodiment 2 above, the PUSCH can be transmitted using the same UL beam (i.e., spatial filter) as the random access preamble transmitted in one RO selected from among a plurality of ROs in which the random access preamble is repeatedly transmitted.

For example, when information on one RO selected from among multiple ROs in which a random access preamble is repeatedly transmitted from the base station (or information on a selected UL beam) is provided/indicated through the single RAR or DCI (or PDCCH) scheduling the single RAR, a UE can transmit a PUSCH using the same UL beam (i.e., spatial filter) as the random access preamble transmitted in the one RO provided/indicated.

As another example, when information on one or more selected ROs from among a plurality of ROs in which a random access preamble is repeatedly transmitted from the base station (or information on one or more selected UL beams) is provided/indicated via the single RAR or the DCI (or PDCCH) scheduling the single RAR, a UE may select one RO from among the one or more provided/indicated ROs (i.e., from among the RO candidates), and the UE may transmit a PUSCH using the same UL beam (i.e., spatial filter) as the random access preamble transmitted in the selected one RO.

Here, one RO associated with an SS/PBCH index having the highest RSRP among one or more SS/PBCH indices associated with/mapped to one or more ROs provided/indicated by the base station may be selected.

In addition, according to the Embodiment 2 above, multiple RARs may be transmitted as each RAR is transmitted after a predetermined time for each transmission of the random access preamble in each of the multiple ROs. In this case, the PUSCH may be transmitted based on an RAR received first among the multiple RARs (i.e., based on an initial RAR UL grant). Here, the PUSCH may be transmitted based on an RAR for an RO associated with an SS/PBCH index having the highest RSRP among the multiple SS/PBCH indices associated with the multiple RARs.

Afterwards, although not shown in FIG. 10, a UE may receive a PDSCH for contention resolution from a base station in the Type 1 random access procedure (Step 4) or the Type 2 random access procedure (Step 2).

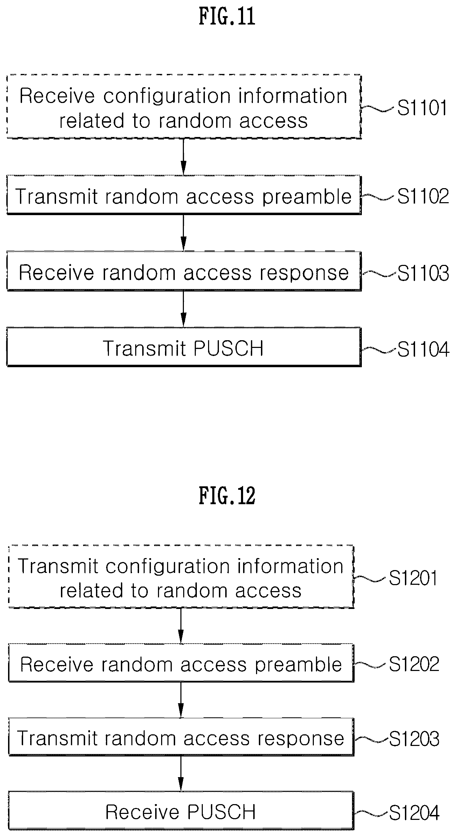

FIG. 11 illustrates an operation of a UE in a method of performing a random access procedure according to an embodiment of the present disclosure.

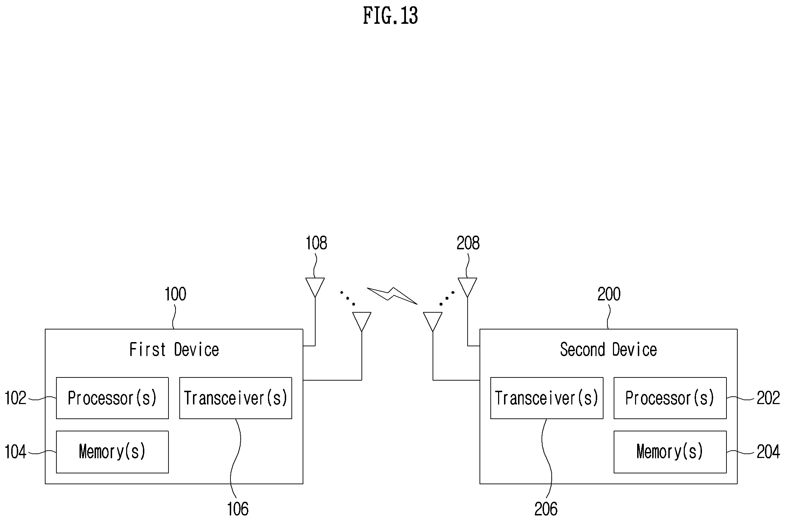

FIG. 11 illustrates an operation of a UE based on the proposed methods. The example of FIG. 11 is provided for convenience of explanation and does not limit the scope of the present disclosure. Some step(s) illustrated in FIG. 11 may be omitted depending on circumstances and/or settings. In addition, the UE in FIG. 11 is only an example and may be implemented as a device illustrated in FIG. 13 below. For example, the processor (102/202) of FIG. 13 may control the transceiver (106/206) to transmit and receive channels/signals/data/information, etc., and may also control the processor (102/202) of FIG. 13 to store transmitted or received channels/signals/data/information, etc. in the memory (104/204).

In addition, the operation of FIG. 11 may be processed by one or more processors (102, 202) of FIG. 13, and the operation of FIG. 11 may be stored in a memory (e.g., one or more memories (104, 204) of FIG. 13) in the form of a command/program (e.g., an instruction, an executable code) for driving at least one processor (e.g., 102, 202) of FIG. 13.

Referring to FIG. 11, a UE can receive configuration information related to random access from a base station (S1101).

Here, the configuration information (e.g., RACH-ConfigCommon, RACH-ConfigDedicated, etc.) may include information for supporting repeated transmission of a random access preamble, and such information may include at least one of, for example, a number of repetitions of a random access preamble, a start RACH slot (i.e., a slot in which the random access preamble is transmitted) index, and a start RO (i.e., PRACH/RACH occasion) symbol index. In addition, the configuration information may include information for supporting repeated transmission of a random access preamble using different UL beams (or spatial filters), and an example of such information may include information such as the number of different beams.

The configuration information can be transmitted through higher layer signaling (e.g., SIB, RRC signaling, etc.).

A UE repeatedly transmits a random access preamble to a base station in multiple ROs (S1102).

Here, a random access preamble may be transmitted through a physical random access channel (PRACH) and may be referred to as Msg1 in a type 1 random access procedure (step 4). Additionally, it may be referred to as MsgA together with a PUSCH transmission in a type 2 random access procedure (step 2).

Here, according to the embodiment 1 above, when a random access preamble is transmitted in a higher SCS slot (e.g., a 480 kHz or 960 kHz SCS slot), the repeated transmission of the random access preamble can be terminated within the (corresponding) higher SCS slots included in one 60 kHz SCS slot. That is, the repeated transmission of the random access preamble is not performed to cross the boundary of one 60 kHz SCS slot, and the repeated transmission of the random access preamble can be completed only within one 60 kHz SCS slot.

Additionally, a start slot index and/or a start RO index for repeated transmission of the random access preamble may be determined such that the repeated transmission of the random access preamble is terminated/completed in the last higher SCS slot among the higher SCS slots included (corresponding to) in the one 60 kHz SCS slot.

In addition, according to the Embodiment 2 above, a UE may repeatedly transmit the random access preamble using different UL beams (i.e., spatial filters) in multiple ROs (or multiple RO groups). That is, the UL beam (i.e., spatial filter) used for transmitting the random access preamble may be different for each RO (or each RO group). In this case, the multiple ROs may be associated/mapped to different multiple SS/PBCH block indices, respectively.

In addition, by combining Embodiments 1 and 2 above, when the random access preamble is transmitted in a higher SCS slot (e.g., a 480 kHz or 960 kHz SCS slot), a UE can repeatedly transmit the random access preamble using different UL beams (i.e., spatial filters) in multiple ROs (or multiple RO groups).

A UE receives one or more random access responses (RARs) from a base station in response to the random access preamble (S1103).

Here, a random access response (RAR) (or RAR message) may be transmitted over a PDSCH, and a UE may receive a PDSCH providing/carrying an RAR message based on scheduling information of a PDCCH (i.e., DCI). The RAR message received over this PDCCH/PDSCH may be referred to as Msg2 in a Type 1 random access procedure (step 4) and may be referred to as MsgB in a Type 2 random access procedure (step 2).

Here, according to the Embodiment 2 above, when a random access preamble is repeatedly transmitted in a plurality of ROs, a single RAR may be transmitted after a predetermined time from the transmission of the random access preamble in a specific RO (e.g., the last RO) among the plurality of ROs. That is, the random access preamble is repeatedly transmitted, but the RAR may be transmitted only once.

Here, information on one RO selected from among multiple ROs to which random access preambles are repeatedly transmitted from the base station (or information on the selected UL beam) may be provided through the single RAR or DCI (or PDCCH) scheduling the single RAR.

Alternatively, information on one or more ROs selected from among multiple ROs to which random access preambles are repeatedly transmitted from the base station (or information on one or more selected UL beams) (i.e., information on RO/UL beam candidates) may be provided through the single RAR or DCI (or PDCCH) scheduling the single RAR.

Here, according to the Embodiment 2 above, when the random access preamble is repeatedly transmitted in multiple ROs, multiple RARs can be transmitted as each RAR is transmitted after a predetermined time for each transmission of the random access preamble in each of the multiple ROs. That is, the random access preamble is repeatedly transmitted, and the RAR can also be transmitted multiple times.

A UE transmits a PUSCH to a base station based on one or more RARs (S1104).

Here, a PUSCH can be transmitted based on the scheduled information included in the RAR (i.e., RAR UL grant). In the Type 1 random access procedure (step 4), the PUSCH can be referred to as a Msg3 PUSCH.

Here, according to the Embodiment 2 above, the PUSCH can be transmitted using the same UL beam (i.e., spatial filter) as the random access preamble transmitted in one RO selected from among a plurality of ROs in which the random access preamble is repeatedly transmitted.

For example, when information on one RO selected from among multiple ROs in which a random access preamble is repeatedly transmitted from the base station (or information on a selected UL beam) is provided/indicated through the single RAR or DCI (or PDCCH) scheduling the single RAR, a UE can transmit a PUSCH using the same UL beam (i.e., spatial filter) as the random access preamble transmitted in the one RO provided/indicated.

As another example, when information on one or more selected ROs from among a plurality of ROs in which a random access preamble is repeatedly transmitted from the base station (or information on one or more selected UL beams) is provided/indicated via the single RAR or the DCI (or PDCCH) scheduling the single RAR, a UE may select one RO from among the one or more provided/indicated ROs (i.e., from among the RO candidates), and the UE may transmit a PUSCH using the same UL beam (i.e., spatial filter) as the random access preamble transmitted in the selected one RO.

Here, one RO associated with an SS/PBCH index having the highest RSRP among one or more SS/PBCH indices associated with/mapped to one or more ROs provided/indicated by the base station may be selected.

In addition, according to the Embodiment 2 above, multiple RARs may be transmitted as each RAR is transmitted after a predetermined time for each transmission of the random access preamble in each of the multiple ROs. In this case, the PUSCH may be transmitted based on an RAR received first among the multiple RARs (i.e., based on an initial RAR UL grant). Here, the PUSCH may be transmitted based on an RAR for an RO associated with an SS/PBCH index having the highest RSRP among the multiple SS/PBCH indices associated with the multiple RARs.

Afterwards, although not shown in FIG. 11, a UE may receive a PDSCH for contention resolution from a base station in the Type 1 random access procedure (Step 4) or the Type 2 random access procedure (Step 2).

FIG. 12 illustrates an operation of a base station in a method of performing a random access procedure according to an embodiment of the present disclosure.

FIG. 12 illustrates an operation of a base station based on the proposed methods. The example of FIG. 12 is provided for convenience of explanation and does not limit the scope of the present disclosure. Some step(s) illustrated in FIG. 12 may be omitted depending on circumstances and/or settings. In addition, the base station in FIG. 12 is only an example and may be implemented as a device illustrated in FIG. 13 below. For example, the processor (102/202) of FIG. 13 may control the transceiver (106/206) to transmit and receive channels/signals/data/information, etc., and may also control the processor (102/202) of FIG. 13 to store transmitted or received channels/signals/data/information, etc. in the memory (104/204).

In addition, the operation of FIG. 12 may be processed by one or more processors (102, 202) of FIG. 13, and the operation of FIG. 12 may be stored in a memory (e.g., one or more memories (104, 204) of FIG. 13) in the form of a command/program (e.g., an instruction, an executable code) for driving at least one processor (e.g., 102, 202) of FIG. 13.

Referring to FIG. 12, a base station can transmit configuration information related to random access to a UE (S1201).

Here, the configuration information (e.g., RACH-ConfigCommon, RACH-ConfigDedicated, etc.) may include information for supporting repeated transmission of a random access preamble, and such information may include at least one of, for example, a number of repetitions of a random access preamble, a start RACH slot (i.e., a slot in which the random access preamble is transmitted) index, and a start RO (i.e., PRACH/RACH occasion) symbol index. In addition, the configuration information may include information for supporting repeated transmission of a random access preamble using different UL beams (or spatial filters), and an example of such information may include information such as the number of different beams.

The configuration information can be transmitted through higher layer signaling (e.g., SIB, RRC signaling, etc.).

A base station repeatedly receives a random access preamble from a UE in multiple ROs (S1202).

Here, a random access preamble may be transmitted through a physical random access channel (PRACH) and may be referred to as Msg1 in a type 1 random access procedure (step 4). Additionally, it may be referred to as MsgA together with a PUSCH transmission in a type 2 random access procedure (step 2).

Here, according to the embodiment 1 above, when a random access preamble is transmitted in a higher SCS slot (e.g., a 480 kHz or 960 kHz SCS slot), the repeated transmission of the random access preamble can be terminated within the (corresponding) higher SCS slots included in one 60 kHz SCS slot. That is, the repeated transmission of the random access preamble is not performed to cross the boundary of one 60 kHz SCS slot, and the repeated transmission of the random access preamble can be completed only within one 60 kHz SCS slot.

Additionally, a start slot index and/or a start RO index for repeated transmission of the random access preamble may be determined such that the repeated transmission of the random access preamble is terminated/completed in the last higher SCS slot among the higher SCS slots included (corresponding to) in the one 60 kHz SCS slot.

In addition, according to the Embodiment 2 above, a base station may repeatedly receive the random access preamble using different UL beams (i.e., spatial filters) in multiple ROs (or multiple RO groups). That is, the UL beam (i.e., spatial filter) used for transmitting the random access preamble may be different for each RO (or each RO group). In this case, the multiple ROs may be associated/mapped to different multiple SS/PBCH block indices, respectively.

In addition, by combining Embodiments 1 and 2 above, when the random access preamble is transmitted in a higher SCS slot (e.g., a 480 kHz or 960 kHz SCS slot), a UE can repeatedly transmit the random access preamble using different UL beams (i.e., spatial filters) in multiple ROs (or multiple RO groups).

A base station transmits one or more random access responses (RARs) to a UE in response to the random access preamble (S1203).

Here, a random access response (RAR) (or RAR message) may be transmitted over a PDSCH, and a base station may transmit a PDSCH providing/carrying an RAR message based on scheduling information of a PDCCH (i.e., DCI). The RAR message received over this PDCCH/PDSCH may be referred to as Msg2 in a Type 1 random access procedure (step 4) and may be referred to as MsgB in a Type 2 random access procedure (step 2).

Here, according to the Embodiment 2 above, when a random access preamble is repeatedly transmitted in a plurality of ROs, a single RAR may be transmitted after a predetermined time from the transmission of the random access preamble in a specific RO (e.g., the last RO) among the plurality of ROs. That is, the random access preamble is repeatedly transmitted, but the RAR may be transmitted only once.

Here, the base station may provide with information on one RO selected from among multiple ROs to which random access preambles are repeatedly transmitted (or information on the selected UL beam) through the single RAR or DCI (or PDCCH) scheduling the single RAR.

Alternatively, the base station may provide with information on one or more ROs selected from among multiple ROs to which random access preambles are repeatedly transmitted (or information on one or more selected UL beams) (i.e., information on RO/UL beam candidates) through the single RAR or DCI (or PDCCH) scheduling the single RAR.

Here, according to the Embodiment 2 above, when the random access preamble is repeatedly transmitted in multiple ROs, multiple RARs can be transmitted as each RAR is transmitted after a predetermined time for each transmission of the random access preamble in each of the multiple ROs. That is, the random access preamble is repeatedly transmitted, and the RAR can also be transmitted multiple times.

A base station receives a PUSCH from a UE based on one or more RARs (S1204).

Here, a PUSCH can be transmitted based on the scheduled information included in the RAR (i.e., RAR UL grant). In the Type 1 random access procedure (step 4), the PUSCH can be referred to as a Msg3 PUSCH.

Here, according to the Embodiment 2 above, the PUSCH can be transmitted using the same UL beam (i.e., spatial filter) as the random access preamble transmitted in one RO selected from among a plurality of ROs in which the random access preamble is repeatedly transmitted.

For example, when the base station provides/indicates with information on one RO selected from among multiple ROs in which a random access preamble is repeatedly transmitted (or information on a selected UL beam) is through the single RAR or DCI (or PDCCH) scheduling the single RAR, a PUSCH can be trasnmitted from a UE using the same UL beam (i.e., spatial filter) as the random access preamble transmitted in the one RO provided/indicated.

As another example, when the base station provides/indicates with information on one or more selected ROs from among a plurality of ROs in which a random access preamble is repeatedly transmitted (or information on one or more selected UL beams) via the single RAR or the DCI (or PDCCH) scheduling the single RAR, a PUSCH may be transmitted from a UE using the same UL beam (i.e., spatial filter) as a random access preamble transmitted from one RO selected from among the provided/indicated one or more ROs (i.e., among RO candidates).

Here, one RO associated with an SS/PBCH index having the highest RSRP among one or more SS/PBCH indices associated with/mapped to one or more ROs provided/indicated by the base station may be selected.

In addition, according to the Embodiment 2 above, multiple RARs may be transmitted as each RAR is transmitted after a predetermined time for each transmission of the random access preamble in each of the multiple ROs. In this case, the PUSCH may be transmitted based on an RAR received first among the multiple RARs (i.e., based on an initial RAR UL grant). Here, the PUSCH may be transmitted based on an RAR for an RO associated with an SS/PBCH index having the highest RSRP among the multiple SS/PBCH indices associated with the multiple RARs.

Afterwards, although not shown in FIG. 11, a base station may trasmit a PDSCH to a UE for contention resolution from in the Type 1 random access procedure (Step 4) or the Type 2 random access procedure (Step 2).

<u>General Device to which the Present Disclosure may be applied</u>

FIG. 13 is a diagram which illustrates a block diagram of a wireless communication device according to an embodiment of the present disclosure.

In reference to FIG. 13, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs (Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor (s). A memory or alternatively, nonvolatile memory device(s) in a memory include a non-transitory computer-readable storage medium. A feature described in the present disclosure may be stored in any one of machinereadable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

**1.** A method performed by a user equipment (UE) in a wireless communication system, the method comprising:

repeatedly transmitting a random access preamble to a base station in a plurality of PRACH (physical random access channel) occasions (RO), wherein each of the plurality of ROs is related to a plurality of different SS/PBCH (synchronization signal/physical broadcast channel) block indices;
receiving one or more random access responses (RARs) from the base station in response to the random access preamble; and
transmitting a PUSCH (physical uplink shared channel) to the base station based on the one or more RARs, wherein the PUSCH is transmitted using the same spatial filter as a random access preamble transmitted in one RO selected from the plurality of ROs.

2. The method of claim 1, wherein a single RAR is transmitted after a predetermined time from transmission of the random access preamble in a last RO among the plurality of ROs.

3. The method of claim 2, wherein information on the selected one RO is provided from the base station through the single RAR or downlink control information (DCI) that schedules the single RAR.

4. The method of claim 2, wherein information on one or more ROs among the plurality of ROs is provided from the base station through the single RAR or downlink control information (DCI) scheduling the single RAR, and
wherein the one RO is selected from the one or more ROs by the UE.

5. The method of claim 4, wherein one RO related to an SS/PBCH index having a highest reference signal received power (RSRP) among one or more SS/PBCH indices related to the one or more ROs is selected.

6. The method of claim 1, wherein a plurality of RARs are transmitted as each RAR is transmitted after a predetermined time for each transmission of the random access preamble in each of the plurality of ROs.

7. The method of claim 6, wherein the PUSCH is transmitted based on a first received RAR among the plurality of RARs.

8. The method of claim 6, wherein the PUSCH is transmitted based on an RAR for an RO related to an SS/PBCH index having a highest reference signal received power (RSRP) among the plurality of SS/PBCH indices related to the plurality of RARs.

9. The method of claim 1, wherein based on the random access preamble being transmitted in a 480 kHz or 960 kHz subcarrier spacing (SCS) slot, repeated transmission of the random access preamble is terminated within 480 kHz or 960 kHz SCS slots included in one 60 kHz SCS slot.

10. The method of claim 9, wherein a start slot index and/or a start RO index for repeated transmission of the random access preamble is determined so that repeated transmission of the random access preamble is terminated in a last 480 kHz or 960 kHz SCS slot among the 480 kHz or 960 kHz SCS slots included in the one 60 kHz SCS slot.

11. A user equipment (UE) operating in a wireless communication system, the UE comprising:

at least one transceiver for transmitting and receiving a wireless signal; and
at least one processor for controlling the at least one transceiver,
wherein the at least one processor configured to:

repeatedly transmit a random access preamble to a base station in a plurality of PRACH (physical random access channel) occasions (RO), wherein each of the plurality of ROs is related to a plurality of different SS/PBCH (synchronization signal/physical broadcast channel) block indices;
receive one or more random access responses (RARs) from the base station in response to the random access preamble; and
transmit a PUSCH (physical uplink shared channel) to the base station based on the one or more RARs, wherein the PUSCH is transmitted using the same spatial filter as a random access preamble transmitted in one RO selected from the plurality of ROs.

12. At least one non-transitory computer-readable medium storing at least one instruction, wherein the at least one instruction executable by at least one processor controls a user equipment (UE) to:

repeatedly transmit a random access preamble to a base station in a plurality of PRACH (physical random access channel) occasions (RO), wherein each of the plurality of ROs is related to a plurality of different SS/PBCH (synchronization signal/physical broadcast channel) block indices;
receive one or more random access responses (RARs) from the base station in response to the random access preamble; and
transmit a PUSCH (physical uplink shared channel) to the base station based on the one or more RARs, wherein the PUSCH is transmitted using the same spatial filter as a random access preamble transmitted in one RO selected from the plurality of ROs.

13. A processing apparatus configured to control a user equipment (UE) in a wireless communication system, the processing apparatus comprising:

at least one processor; and
at least one computer memory operably connected to the at least one processor and storing instructions that, based on being executed by the at least one processor, perform operations comprising:

repeatedly transmitting a random access preamble to a base station in a plurality of PRACH (physical random access channel) occasions (RO), wherein each of the plurality of ROs is related to a plurality of different SS/PBCH (synchronization signal/physical broadcast channel) block indices;
receiving one or more random access responses (RARs) from the base station in response to the random access preamble; and
transmitting a PUSCH (physical uplink shared channel) to the base station based on the one or more RARs, wherein the PUSCH is transmitted using the same spatial filter as a random access preamble transmitted in one RO selected from the plurality of ROs.

14. A method performed by a base station in a wireless communication system, the method comprising:

repeatedly receiving a random access preamble from a user equipment (UE) in a plurality of PRACH (physical random access channel) occasions (RO), wherein each of the plurality of ROs is related to a plurality of different SS/PBCH (synchronization signal/physical broadcast channel) block indices;
transmitting one or more random access responses (RARs) to the UE in response to the random access preamble; and
receiving a PUSCH (physical uplink shared channel) from the UE based on the one or more RARs, wherein the PUSCH is transmitted using the same spatial filter as a random access preamble transmitted in one RO selected from the plurality of ROs.

15. A base station operating in a wireless communication system, the UE comprising:

at least one transceiver for transmitting and receiving a wireless signal; and
at least one processor for controlling the at least one transceiver,
wherein the at least one processor configured to:

repeatedly receive a random access preamble from a user equipment (UE) in a plurality of PRACH (physical random access channel) occasions (RO), wherein each of the plurality of ROs is related to a plurality of different SS/PBCH (synchronization signal/physical broadcast channel) block indices;
transmit one or more random access responses (RARs) to the UE in response to the random access preamble; and
receive a PUSCH (physical uplink shared channel) from the UE based on the one or more RARs, wherein the PUSCH is transmitted using the same spatial filter as a random access preamble transmitted in one RO selected from the plurality of ROs.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends
on subcarrier
spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

## FIG.4

Freq.

1ms subframe:
14 symbols/slot

12 × 15 KHz

12 × 30 KHz

PRB

12 × 60 KHz

Time

# FIG.5

# FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

# FIG.7

(a)

(b)

# FIG.8

BS            UE

MsgA

Random access preamble

PUSCH part

MsgB

(a)

BS            UE

Random access preamble allocation

MsgA

Random access preamble

PUSCH part

MsgB

(b)

## FIG.9

## FIG.10

## FIG.11

```
┌ ─ ─ ─ ─ ─ ─ ─ ─ ─ ─ ─ ─ ─ ─ ─ ─ ─ ─ ─ ─ ─ ┐
│  Receive configuration information       │ ～S1101
│        related to random access          │
└ ─ ─ ─ ─ ─ ─ ─ ─ ─ ─ ─ ─ ─ ─ ─ ─ ─ ─ ─ ─ ─ ┘
                      │
                      ▼
┌───────────────────────────────────────────┐
│     Transmit random access preamble       │ ～S1102
└───────────────────────────────────────────┘
                      │
                      ▼
┌───────────────────────────────────────────┐
│      Receive random access response       │ ～S1103
└───────────────────────────────────────────┘
                      │
                      ▼
┌───────────────────────────────────────────┐
│              Transmit PUSCH                │ ～S1104
└───────────────────────────────────────────┘
```

## FIG.12

```
┌ ─ ─ ─ ─ ─ ─ ─ ─ ─ ─ ─ ─ ─ ─ ─ ─ ─ ─ ─ ─ ─ ┐
│  Transmit configuration information       │ ～S1201
│        related to random access           │
└ ─ ─ ─ ─ ─ ─ ─ ─ ─ ─ ─ ─ ─ ─ ─ ─ ─ ─ ─ ─ ─ ┘
                      │
                      ▼
┌───────────────────────────────────────────┐
│      Receive random access preamble       │ ～S1202
└───────────────────────────────────────────┘
                      │
                      ▼
┌───────────────────────────────────────────┐
│     Transmit random access response       │ ～S1203
└───────────────────────────────────────────┘
                      │
                      ▼
┌───────────────────────────────────────────┐
│              Receive PUSCH                 │ ～S1204
└───────────────────────────────────────────┘
```

FIG.13

**INTERNATIONAL SEARCH REPORT**

| International application No. |
|---|
| **PCT/KR2023/010778** |

| A. | CLASSIFICATION OF SUBJECT MATTER |
|---|---|

**H04W 74/08**(2009.01)i; **H04W 74/00**(2009.01)i; **H04L 1/08**(2006.01)i; **H04B 7/06**(2006.01)i; **H04W 84/06**(2009.01)i

According to International Patent Classification (IPC) or to both national classification and IPC

| B. | FIELDS SEARCHED |
|---|---|

Minimum documentation searched (classification system followed by classification symbols)

H04W 74/08(2009.01); H04L 1/00(2006.01); H04W 4/029(2018.01); H04W 72/08(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공간 필터(spatial filter), 상향링크 빔(uplink beam), 랜덤 액세스 기회(RA occasion), 반복 전송(repetition transmission)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021-033946 A1 (LG ELECTRONICS INC.) 25 February 2021 (2021-02-25)<br>See paragraphs [0013]-[0269]; and figures 2 and 21. | 1-15 |
| A | SAMSUNG. Introduction for extending NR operation to 71 GHz. R1-2112931, 3GPP TSG RAN WG1 #107-e, e-Meeting. 08 December 2021.<br>See page 6. | 1-15 |
| A | KR 10-2022-0016461 A (QUALCOMM INCORPORATED) 09 February 2022 (2022-02-09)<br>See claims 1-2. | 1-15 |
| A | US 2022-0046714 A1 (ZHOU, Hua et al.) 10 February 2022 (2022-02-10)<br>See paragraphs [0328]-[0363]; and figure 36. | 1-15 |
| A | WO 2022-067227 A1 (CIRIK, Ali Cagatay et al.) 31 March 2022 (2022-03-31)<br>See claims 1-5. | 1-15 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 October 2023** | **26 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/010778**

| Patent document cited in search report | | | Publication date (day/month/year) | Patent family member(s) | | | Publication date (day/month/year) |
|---|---|---|---|---|---|---|---|
| WO | 2021-033946 | A1 | 25 February 2021 | CN | 114208383 | A | 18 March 2022 |
| | | | | EP | 3982689 | A1 | 13 April 2022 |
| | | | | JP | 2022-544329 | A | 17 October 2022 |
| | | | | KR | 10-2022-0046543 | A | 14 April 2022 |
| | | | | KR | 10-2565557 | B1 | 11 August 2023 |
| | | | | US | 11576210 | B2 | 07 February 2023 |
| | | | | US | 2021-0051731 | A1 | 18 February 2021 |
| | | | | US | 2023-0164850 | A1 | 25 May 2023 |
| KR | 10-2022-0016461 | A | 09 February 2022 | AU | 2020-283409 | A1 | 25 November 2021 |
| | | | | BR | 112021023081 | A2 | 04 January 2022 |
| | | | | CN | 113875174 | A | 31 December 2021 |
| | | | | EP | 3977647 | A1 | 06 April 2022 |
| | | | | JP | 2022-534566 | A | 02 August 2022 |
| | | | | TW | 202106053 | A | 01 February 2021 |
| | | | | US | 11576060 | B2 | 07 February 2023 |
| | | | | US | 2020-0382978 | A1 | 03 December 2020 |
| | | | | WO | 2020-242755 | A1 | 03 December 2020 |
| US | 2022-0046714 | A1 | 10 February 2022 | None | | | |
| WO | 2022-067227 | A1 | 31 March 2022 | CN | 116783972 | A | 19 September 2023 |
| | | | | EP | 4218346 | A1 | 02 August 2023 |
| | | | | US | 2023-0224916 | A1 | 13 July 2023 |

Form PCT/ISA/210 (patent family annex) (July 2022)